(19) Europäisches Patentamt

European Patent Office

Office européen des brevets

(11) **EP 1 780 096 A1**

(12) **EUROPEAN PATENT APPLICATION**

(43) Date of publication:
**02.05.2007 Bulletin 2007/18**

(51) Int Cl.:
**B62D 5/04** $^{(2006.01)}$

(21) Application number: **06022703.0**

(22) Date of filing: **31.10.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **01.11.2005 JP 2005318699**

(71) Applicant: **NSK LTD.**
**Shinagawa-ku,**
**Tokyo (JP)**

(72) Inventors:
• **Sakaguchi, Toru**
  **Maebashi-shi**
  **Gunma 371-8527 (JP)**
• **Kovudhikulrungsri, Lilit**
  **Maebashi-shi**
  **Gunma 371-8527 (JP)**

(74) Representative: **Grünecker, Kinkeldey,**
**Stockmair & Schwanhäusser**
**Anwaltssozietät**
**Maximilianstrasse 58**
**80538 München (DE)**

(54) **Control device for electric power steering system**

(57)   In a control device for an electric power steering system for controlling a motor on the basis of an auxiliary steering command value calculated from a steering torque generated in a steering shaft and a vehicle speed, and a current detection value of the motor that applies an auxiliary steering force to a steering mechanism, the device comprises a damping compensation unit that calculates a basic damping compensation value on the basis of a steering speed and adjusts the basic damping compensation value on the basis of an SAT estimated value and the steering speed, wherein an adjusted damping compensated value that is adjusted in the damping compensation unit is added to the auxiliary steering command value.

FIG. 1

EP 1 780 096 A1

**Description**

BACKGROUND OF THE INVENTION

1. Field of the Invention

The present invention relates to a control device for an electric power steering system for applying an auxiliary steering force by a motor to a steering system of an automobile or a vehicle. More particularly, the present invention relates to a control device for an electric power steering system in which a damping function is improved so that a strong (inadequate) return feeling during steering a steering wheel toward neutral position is reduced without impairing a smooth feeling at beginning of steering from a neutral position to a rack end and a reaction feeling during steering further.
Note that the return feeling is a feeling which can be felt where a steered wheel is returned to a neutral position so that a steering angle of the steering wheel becomes smaller, this state is called the steer-back state hereinafter.
The smooth feeling is a feeling which can be felt where a driver begins to steer the steering wheel without any interference such as a damping feeling, a friction feeling or a sticking feeling.
The reaction feeling is a proper degree of resistance to feel the vehicle movement, which can be felt when the driver steers the steering wheel toward the rack end from the neutral position so that the steering angle of the steering wheel becomes larger, this state is called the steer-forward state hereinafter.

2. Description of Related Art

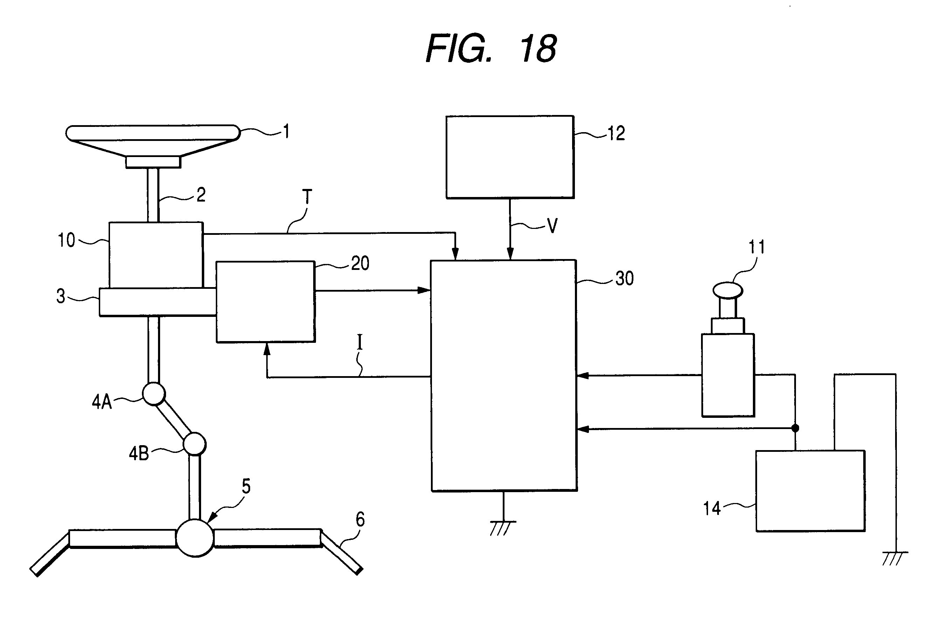

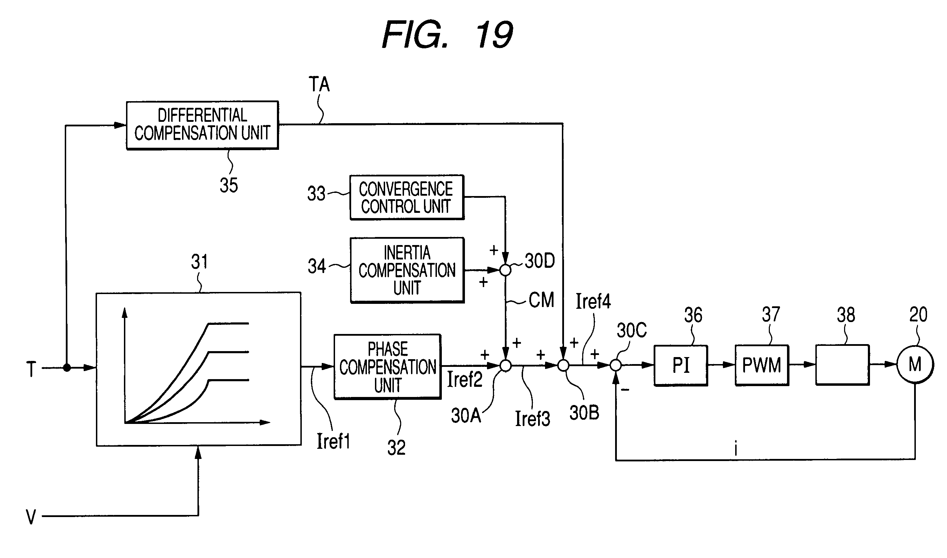

An electric power steering system, which energizes (assists) steering auxiliary assist force to a steering system of an automobile or vehicle by a motor, applies driving force of a motor to a steering shaft or rack shaft by a transmission mechanism such as a gear or belt through a reducer. In the electric power steering system of the related art, a feedback control of a motor current is performed so as to accurately generate an assist torque (auxiliary steering force). The feedback control is to adjust a motor applied voltage applied to a motor such that the difference between a current command value and a motor current detection value becomes small. Generally, the adjustment of the motor applied voltage is performed by adjusting a duty ratio of a PWM (pulse width modulation) control.
Here, Fig. 18 shows a general structure of the electric power steering system. A column shaft 2 of a steering wheel 1 is connected to a tie-rod 6 of a front wheel through a reduction gear 3, universal joints 4A and 4B, a rack and pinion mechanism 5. The column shaft 2 is provided with a torque sensor 10 that detects a steering torque of the steering wheel 1. A motor 20 that assists a steering force to the steering wheel 1 is connected to the column shaft 2 through the reduction gear 3. An electric power is supplied to a control unit 30 which controls the power steering system, from a battery 14, and an ignition key signal is inputted to the control unit 30 from an ignition key 11. On the basis of a steering torque T detected by the torque sensor 10 and a vehicle speed V detected by a vehicle speed sensor 12, the control unit 30 calculates an auxiliary steering command value I of an assist command by using an assist map or the like. Then, the control unit 30 controls the current to be supplied to the motor 20 in accordance with the calculated auxiliary steering command value I.
The control unit 30 is mainly provided with a CPU (or, MPU or MCU). Fig. 19 shows a general function that is executed by a program in the CPU.
The function and operation of the control unit 30 will be described with reference to Fig. 19. The steering torque T detected by the torque sensor 10 and the vehicle speed V detected by the vehicle speed sensor 12 are inputted to an auxiliary steering command value calculating unit 31, and a basic auxiliary steering command value Iref1 is calculated. The calculated basic auxiliary steering command value Iref1 is phase-compensated by a phase compensation unit 32 so as to increase the stability of the steering system. The phase-compensated auxiliary steering command value Iref2 is inputted to an adding unit 30A. In addition, each compensation signal of a convergence (yaw damping) control unit 33 and an inertia compensation unit 34 is added in an adding unit 30D. A compensation signal CM obtained from the adding unit 30D is inputted to the adding unit 30A and added with the auxiliary steering command value Iref2. An auxiliary steering command value Iref3 added in the adding unit 30A is inputted to an adding unit 30B.
The steering torque T is inputted to a differential compensation unit 35 as a feed forward system so as to increase a response speed, and the differentially compensated steering torque TA is inputted to the adding unit 30B. The adding unit 30B adds the auxiliary steering command value Iref3 and the differentially compensated steering torque TA, and an auxiliary steering command value Iref4 added in the adding unit 30B is inputted to a subtracting unit 30C. The subtracting unit 30C calculates the deviation (Iref4 - i) of the auxiliary steering command value Iref4 and a motor current i. The deviation (Iref4 - i) is inputted to a PI control unit 36. The output of PI control unit 36 is inputted to a PWM control unit 37, thus calculating the duty, and the motor 20 is PWM-driven through an inverter 38. The motor current value i of the motor 20 is detected by a motor current detecting unit (not shown) and inputted to the subtracting unit 30C so as to perform feed-back control.

In the above-described electric power steering system, recently, the electric power steering system, which drives the motor during only the steering so as to reduce electric power consumption, has been manufactured a lot and mounted on even a heavy vehicle. In a case where such the electric power steering system is mounted in the heavy vehicle, a force (restorative force) toward straight forward direction, namely SAT (self aligning torque) and tires are become larger, and particularly, the return feeling becomes strong during the steer-back state. Therefore, a steering feeling is deteriorated. Because a driver fight to strong restorative force (torque).

As a related art, the electric power steering systems are disclosed, for example, in Japanese Patent Examined Publication JP-B-2791299 and Japanese Patent Unexamined Publication JP-A-2004-276821. In JP-B-2791299, the electric power steering system calculates a damping compensation value on the basis of the motor speed and the vehicle speed, and obtains a current command value by adding the damping compensation value to a command value based on the steering torque. In addition, In JP-A-2004-276821, the electric power steering system includes compensation current setting means for setting a compensation current value according to the steering speed and adjustment means for adjusting the compensation current value on the basis of the steering torque. The adjust means adjusts such that as the absolute value of the steering torque becomes larger, the absolute value of the compensation current becomes larger.

However, in JP-B-2791299, a compensation value is calculated based on a motor speed and a vehicle speed, but a magnitude of an SAT (self aligning torque) is not considered. Therefore, it is difficult to maintain good steering feelings at near neutral position where SAT is small and at large steering angle position where SAT becomes somewhat larger. Namely, in order to reduce the strong returning feeling due to a large SAT, a large damping compensation value is applied, thereby impairing the smooth feeling near neutral position.

Furthermore, in JP-A-2004-276821, a damping compensation value is adjusted to be larger when the steering torque is large, but it is insufficient because the steering torque and the SAT do not necessarily coincide. For example, when an assist map is set such that a maintaining holding torque is light, the steering torque is small even when the restorative force of a vehicle is large, and the damping compensation value does not become larger sufficiently, so that it is not possible to reduce the strong returning feeling sufficiently. When the adjustment is set large in order to reduce the strong returning feeling, the smooth feeling at near the neutral position is impaired. Furthermore, in the devices described in the JP-B-2791299 and JP-A-2004-276821, because there is no consideration about distinction between steer-forward state and steer-back state, it is difficult to ensure the smooth feeling and the good (adequate) returning feeling.

SUMMARY OF THE INVENTION

The present invention is achieved in view of such situations. An object of the invention is to provide a control device for an electric power steering system which has improved damping function and excellent steering feeling in which strong returning feeling during steer-back state is reduced without deteriorating the smooth feeling and the reaction feeling during the operation of the steering.

According to a first aspect of the invention, there is provided a control device for an electric power steering system which applies an auxiliary steering force to a steering mechanism by a motor, the control device comprising:

a control unit that controls the motor in accordance with:

an auxiliary steering command value calculated from a steering torque generated in a steering shaft and a vehicle speed; and
a current detection value of the motor; and

a damping compensation unit that calculates a basic damping compensation value in accordance with a steering speed and that outputs an adjusted damping compensation value, which is the basic damping compensation value adjusted based on a self aligning torque (SAT) estimated value and the steering speed,

wherein the adjusted damping compensation value is added to the auxiliary steering command value so as to control the motor.

According to a second aspect of the invention, there is provided a control device for an electric power steering system which applies an auxiliary steering force to a steering mechanism by a motor, the control device comprising:

a control unit that controls the motor in accordance with:

an auxiliary steering command value calculated from a steering torque generated in a steering shaft and a vehicle speed; and
a current detection value of the motor; and

a damping compensation unit that calculates a basic damping compensation value in accordance with a steering speed and that outputs an adjusted damping compensation value, which is the basic damping compensation value adjusted based on a self aligning torque (SAT) estimated value,
wherein the adjusted damping compensation value is added to the auxiliary steering command value so as to control the motor.

According to a third aspect of the invention, as set forth in the first or second aspect of the invention, it is preferable that the control device for the electric power steering further comprises

a first adjusting unit that varies the damping compensation value with respect to the vehicle speed.

According to a fourth aspect of the invention, as set forth in the third aspect of the invention, it is preferable that the first adjusting unit calculates a vehicle speed gain with respect to the vehicle speed, and adjusts the damping compensation value based on the vehicle speed gain.

According to a fifth aspect of the invention, as set forth in the third aspect of the invention, it is preferable that the adjustment of damping compensation value is performed by an arithmetic expression in which one of a plurality of calculation parameters set in advance according to the vehicle speed is selected with respect to the vehicle speed, or by an interpolation calculation according to the vehicle speed.

According to a sixth aspect of the invention, as set forth in the third aspect of the invention, it is preferable that the adjustment of damping compensation value is performed by a map in which one of a plurality of maps defining relation between the SAT estimated value and an adjustment value set in advance according to the vehicle speed is selected with respect to the vehicle speed, or by an interpolation calculation according to the vehicle speed.

According to a seventh aspect of the invention, as set forth in the first or second aspect of the invention, it is preferable that the control device for the electric power steering system further comprises a determination unit that determines a steer-forward/steer-back state, and

a second adjusting unit that varies the damping compensation value base on a determination of the determination unit.

According to an eighth aspect of the invention, as set forth in the seventh aspect of the invention, it is preferable that the second adjusting unit calculates a steer-forward/steer-back-state-gain according to the determination result, and adjusts the damping compensation value on the basis of the steer-forward/steer-back-state-gain.

According to a ninth aspect of the invention, as set forth in the seventh aspect of the invention, it is preferable that the adjustment of damping compensation value is performed by an arithmetic expression in which one of a plurality of calculation parameters set in advance according to the steer-forward/steer-back state is selected with respect to the determination result, or by an interpolation calculation according to the vehicle speed.

According to a tenth aspect of the invention, as set forth in the seventh aspect of the invention, it is preferable that the adjustment of damping compensation value is performed by a map in which one of a plurality of SAT estimated value versus adjustment value maps set in advance according to the steer-forward/steer-back state is selected with respect to the determination result, or by an interpolation according to the vehicle speed.

According to an eleventh aspect of the invention, as set forth in the first or second aspect of the invention, it is preferable that instead of the SAT estimated value, any one of a torque of a pinion, a rack axial force, a sum of a value obtained by converting the auxiliary steering command value into the torque of a pinion and the steering torque, a sum of the auxiliary steering command value and a value obtained by converting the steering torque into an auxiliary steering command value, a steering angle, and a displacement of a rack is used.

According to a twelfth aspect of the invention, as set forth in the first or second aspect of the invention, it is preferable that the steering speed is obtained based on a motor angle signal.

According to a thirteenth aspect of the invention, as set forth in the first or second aspect of the invention, it is preferable that the steering speed is obtained based on a signal of a steering angle sensor.

According to a fourteenth aspect of the invention, as set forth in the first or second aspect of the invention, it is preferable that an rotation speed of the motor is estimated from a current of the motor and a terminal voltage of the motor, and the estimated rotation speed of the motor is used as the steering speed.

In the control device for the electric power steering system according to the invention, since the adjustment of damping compensation value is performed in consideration of the SAT estimated value, the steer-forward state and the steer-back state, it is possible to realize a control device for an electric power steering system having excellent steering feeling, in which a strong return feeling during the steer-back state is reduced without impairing the smooth feeling and the reaction feeling by improving the damping function.

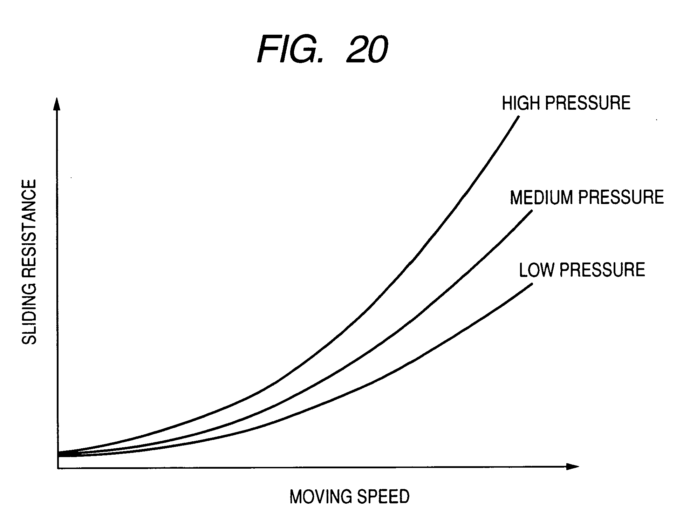

Furthermore, a sliding resistance due to a seal of a hydraulic power steering is changed by a pressure, and has characteristics as shown in Fig. 20. This fact indicates that, in the electric power steering system, in order to obtain the same characteristics as the hydraulic power steering, it is preferable to set the resistive force to be applied to the system larger when the SAT is large, and the invention is accomplished by adjusting the damping compensation value with respect to the SAT estimated value.

BRIEF DESCRIPTION OF THE DRAWINGS

Fig. 1 is a block diagram showing a basic structure example of the invention;
Fig. 2 is a block diagram showing a first embodiment of a damping compensation unit;
Figs. 3A and 3B are characteristic diagrams showing a characteristic example of a basic damping compensation unit;
Fig. 4 is a block diagram showing a structural example of a damping adjustment value calculating unit;
Figs. 5A and 5B are characteristic diagrams showing a characteristic example of a SAT adjustment value calculating unit;
Fig. 6 is a diagram showing an operating characteristic example according to the invention;
Fig. 7 is a diagram showing an operating characteristic example according to the invention;
Figs. 8A and 8B are diagrams showing an operating characteristic example according to the invention;
Fig. 9 is a block diagram showing a second embodiment of a damping compensation unit;
Fig. 10 is a block diagram showing a third embodiment of a damping compensation unit;
Figs. 11A and 11B are characteristic diagrams showing a characteristic example of a SAT adjustment value calculating unit;
Fig. 12 is a diagram showing an operating characteristic example according to the invention;
Fig. 13 is a block diagram showing a fourth embodiment of a damping compensation unit;
Figs. 14A and 14B are diagrams showing an operating characteristic example according to the invention;
Fig. 15 is a flow chart showing an interpolation operating example;
Fig. 16 is a diagram for explaining an interpolation;
Fig. 17 is a diagram for explaining an interpolation;
Fig. 18 is a configuration diagram showing a general structure example of an electric power steering system;
Fig. 19 a block diagram showing a structure example of a control unit; and
Fig. 20 is a view showing an example of a sliding resistance according to a seal of a hydraulic power cylinder.

DETAILED DESCRIPTION OF EXEMPLARY EMBODIMENTS OF THE INVENTION EMBODIMENTS

In the invention, a damping compensation unit that calculates a basic damping compensation value on the basis of a steering speed and adjusts the basic damping compensation value on the basis of an SAT estimated value and the steering speed is provided. The basic damping compensation value is adjusted by an output of the damping adjustment unit, and the adjusted damping compensation value is added to an auxiliary steering command value. Since the adjustment of damping compensation value is calculated in consideration of the SAT estimated value and steer-forward and the steer-back state, it is possible to realize a control device for an electric power steering system having excellent steering feeling, in which a strong return feeling during the steering a steering wheel toward neutral position is reduced without impairing the smooth feeling near the neutral position and the reaction feeling during a increasing of steering angle by improving a damping function.

Hereinafter, embodiments of the present invention will be described with reference to the attached drawings.

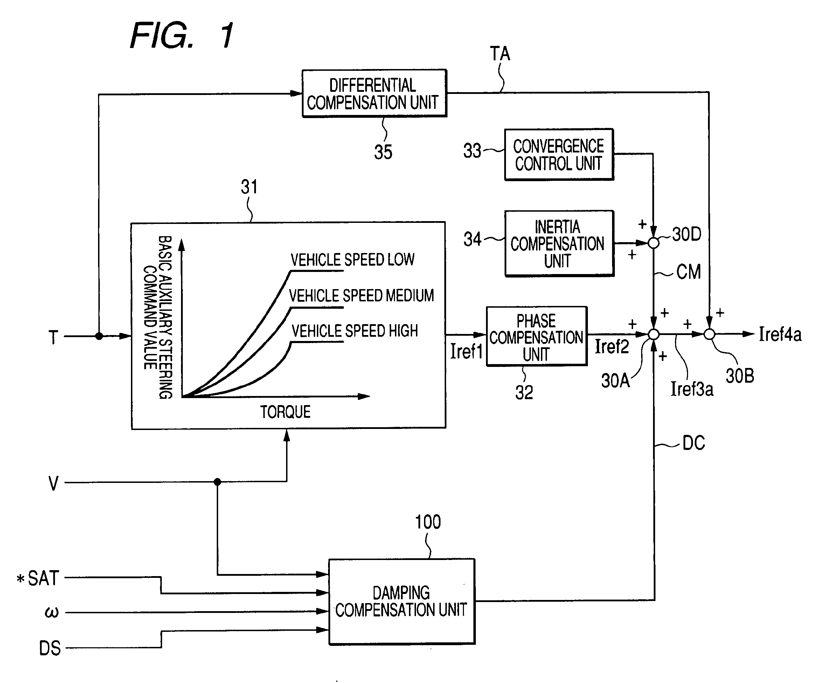

Fig. 1 shows a basic configuration of the invention shown by corresponding to Fig. 19. A damping compensation unit 100 that calculates a damping compensation value DC and adds the calculated damping compensation value DC to an auxiliary steering command value Iref2 is provided. A vehicle speed V, an SAT estimated value *SAT, a steering speed $\omega$, and a steer-forward/steer-back state determination signal DS are inputted into the damping compensation unit 100.

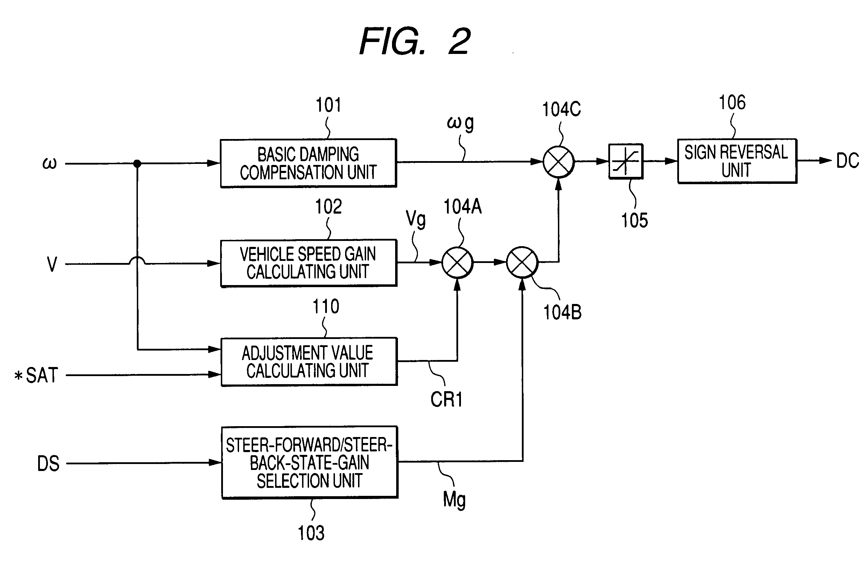

The damping compensation unit 100 is configured as shown in Fig. 2. The damping compensation unit 100 is provided with a basic damping compensation unit 101 that calculates a basic damping compensation value $\omega g$ on the basis of the steering speed $\omega$, a vehicle speed gain calculating unit 102 that calculates a vehicle speed gain Vg on the basis of the vehicle speed V, an adjustment value calculating unit 110 that calculates an adjustment value CR1 on the basis of the steering speed $\omega$ and the SAT estimated value *SAT, a steer-forward/steer-back-state-gain selection unit 103 that selects a steer-forward/steer-back-state-gain Mg on the basis of the steer-forward/steer-back state determination signal DS, a multiplying unit 104A that multiplies the vehicle speed gain Vg from the vehicle speed gain calculating unit 102 and the adjustment value CR1 from the adjustment value calculating unit 110, a multiplying unit 104B that multiplies the results obtained by the multiplying unit 104A and the steer-forward/steer-back-state-gain Mg selected by the steer-forward/steer-back-state-gain selection unit 103, a multiplying unit 104C that multiplies the results obtained by the multiplying unit 104B and the basic damping compensation value ωg obtained from the basic damping compensation unit 101, a limiter 105 that limits a maximum value of the output of the multiplying unit 104C, and a sign reversal unit 106 that reverses a sign of the output of unit 104C.

The SAT estimated value *SAT is estimated by a method that is disclosed in Japanese Patent Unexamined Publication JP-A-2002-369565. That is, in a steering system of the vehicle, a driver steers a steering wheel, a steering torque Th generates. Then, a motor generates an assist torque Tm in accordance with the steering torque Th. As a result, the front wheel is steered, and SAT is generated as its reactive force. At this time, a torque that resists the steering wheel operation is generated by inertia J of the motor and friction (static friction) Fr. When considering balance of the forces, a dynamic equation as following formula (1) is obtained.

$$J \cdot d\omega/dt + Fr \cdot \sin(\omega) + SAT = Tm + Th \quad \cdots (1)$$

Here, when performing Laplace-transforming on the formula (1) by setting an initial value as zero, and solve the formula (1) about SAT, a following formula (2) is obtained.

$$SAT(s) = Tm(s) + Th(s) - J \cdot s \cdot \omega(s) - Fr \cdot \sin(\omega(s)) \quad \cdots (2)$$

As can be known from the formula (2), by preliminarily calculating the inertia J of the motor and the static friction Fr as a constant, the SAT can be estimated from a rotation speed ω of the motor, an rotation acceleration dω/dt of the motor, an auxiliary steering force, and a steering torque.

The steer-forward/steer-back state is determined as disclosed in Japanese Patent Examined Publication JP-B-3692660. That is, when the direction of the steering torque detected by a torque sensor does not agree with the direction of the steering speed, it is determined as the steering-back state. Meanwhile, when the direction of the steering torque detected by a torque sensor agrees with the direction of the steering speed, it is determined as the steering-toward state.

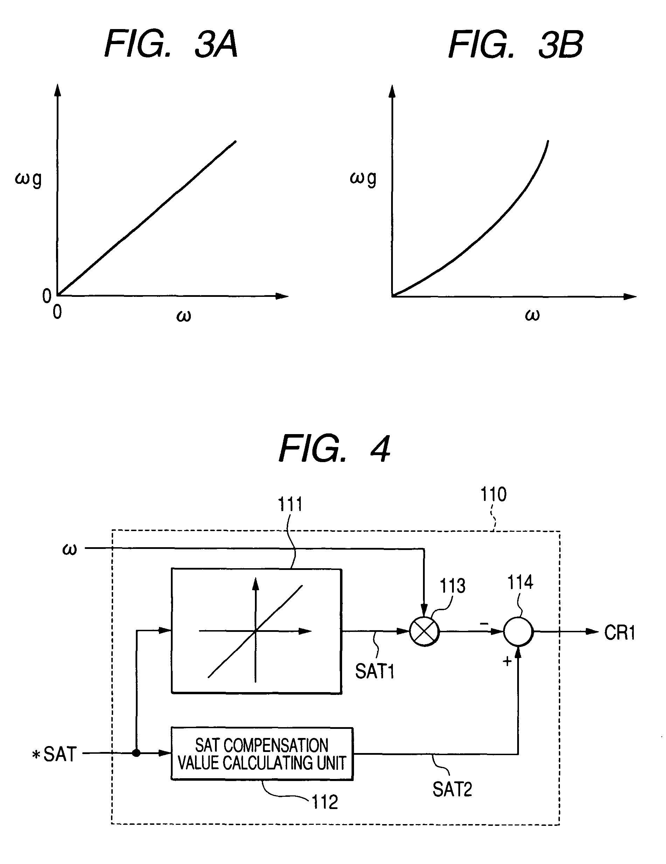

The basic damping compensation unit 101 outputs the basic damping compensation value ωg having a linear property as shown in Fig. 3A, or outputs the basic damping compensation value ωg having a non-linear property as shown in Fig. 3B. It does not matter even if either one of the properties is used.

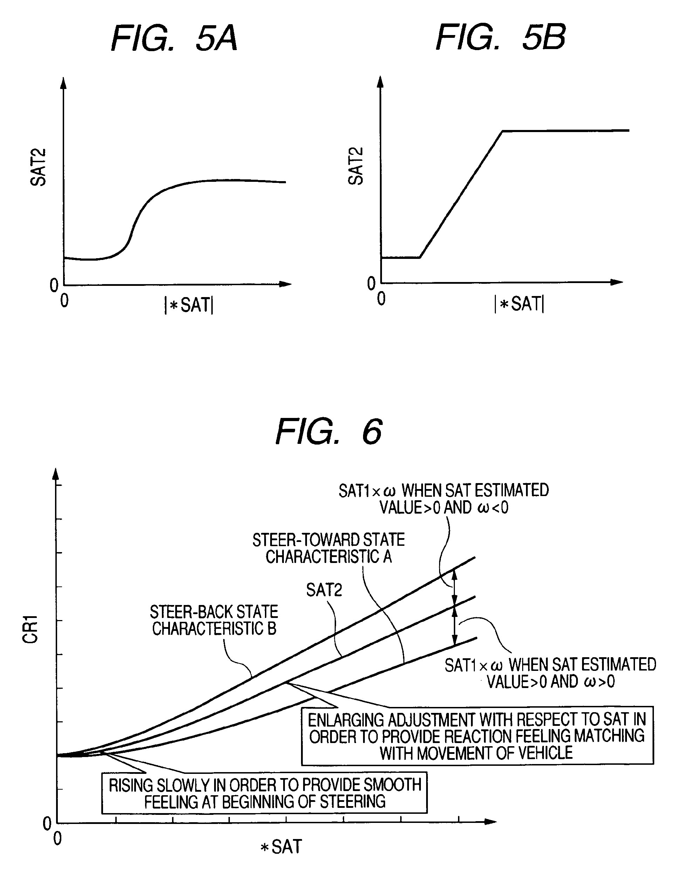

The adjustment value calculating unit 110 is configured as shown in Fig. 4. The adjustment value calculating unit 110 is provided with a gain unit 111 that gain-converts by inputting the SAT estimated value *SAT, a SAT compensation value calculating unit 112 that inputs the SAT estimated value *SAT and calculates a SAT compensation value SAT2 relative to an absolute value |*SAT| of the SAT estimated value *SAT, a multiplying unit 113 that multiplies a gain SAT1 from the gain unit 111 and the steering speed ∞, and a subtracting unit 114 that subtracts the multiplied results obtained by the multiplying unit 113 from the SAT compensation value SAT2. The SAT compensation value calculating unit 112 outputs the SAT compensation value SAT2 having the properties shown in Figs. 5A and 5B with respect to the absolute value |*SAT|.

In this configuration, a calculation of an auxiliary steering current command value Iref2 and compensation signal CM is calculated in the same manner as in the related art. In addition, in the present invention, a damping compensation value DC corresponding to the steering speed ω is calculated so as to impart the damping.

As the steering speed ω becomes higher, the damping compensation value DC increases. For example, when the steering wheel is returned, a current command value Iref4a is calculated so as to increase an assist torque (brake force). Accordingly, a required operation steering torque T is reduced, and it can reduce the unpleasant return feeling of the steering wheel. Here, when the basic damping compensation value ωg is adjusted so as to be increased as the SAT is increased, it can further reduce the unpleasant return feeling of the steering wheel. Conversely, when the SAT is small like the state of going straight forward, since the adjustment with respect to the basic damping compensation value ωg becomes small, the smooth feeling at the beginning of steering the steering wheel from a neutral position can be obtained. In addition, when the steering angle of the steering wheel is further increased from the neutral state, the SAT is increased. Accordingly, the damping compensation value DC is also increased, thus the steering torque T is increased.

Since the adjustment is performed with respect to the basic damping compensation value ωg, the smooth feeling near the neutral position and the reaction feeling matching with the movement of the vehicle can be realized.

Fig. 6 shows characteristic example of an adjustment value CR1 relative to the SAT estimated value *SAT and shows an adjustment amount SAT1 x ω depending on the steering speed and the adjustment value SAT2 depending on the SAT estimated value *SAT, when the steering speed is constant. In order to simplify the explanation, the SAT estimated value *SAT is set a positive value constantly. Fig. 6 shows the steer-toward state that the steering speed ω is the positive (ω > 0) and the steer-back state that the steering speed ω is a negative (ω < 0). In the steer-toward state (ω > 0), the SAT1 is the positive, and the adjustment fraction SAT1 x m is also the positive. Since the value of 'SAT2 - SAT1 x ω' is calculated by an adding unit 114, the CR1 shows the steer-toward state characteristic A of Fig. 6. In the steer-back state (ω< 0), although the SAT1 is positive, the adjustment fraction SAT1 x m becomes negative. Since 'SAT2 - SAT1 x ω' is calculated by the adding unit 114, the CR1 shows the steer-back state characteristic B of Fig. 6.

Since the adjustment amount is adjusted by the steering direction, the damping compensation value becomes small so not as to impair the smooth feeling when the steering wheel is turned. In addition, since the damping compensation value becomes large when the steering wheel is returned, it can reduce the strong return feeling. Therefore, tasks relative to the steering feeling described above can be achieved at the same time. In order to provide the smooth feeling when the steering wheel is turned, the SAT2 smoothly rises with respect to the SAT estimated value *SAT. Then the SAT2 increases in accordance with the SAT estimated value *SAT so as to provide the reaction feeling corresponding to the movement of the vehicle.

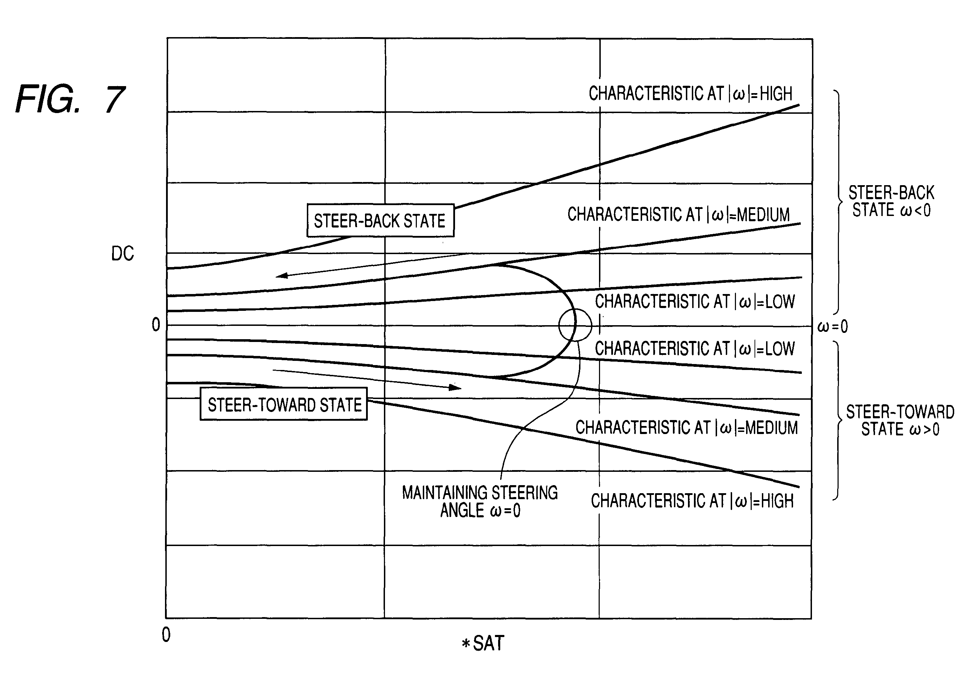

Furthermore, when a position of the steering wheel maintained, the steering speed ω is zero, and the damping compensation value DC is zero. Accordingly, when the steering wheel position is maintained, the steering torque T becomes smaller than that of when the steering wheel is steered, and the good holding steering feeling can be realized. The restorative force is increased so as to become high vehicle speed. Therefore, when the damping compensation value DC is adjusted according to the vehicle speed V, the steering feeling of the driver is further improved. In addition, if the damping compensation value DC is adjusted by the determination signal DS of the steer-forward/steer-back state, the steering feeling becomes better. Fig. 7 shows a characteristic example of the damping compensation value DC at the steer-toward state and the steer-back state at each the steering speed. In Fig. 7, shows only a case where the SAT estimated value *SAT is positive. During the steer-toward state, the damping compensation value DC is negative. This fact indicates that the current command value is resist to the increasing of steering angle direction. During the steer-back state, the damping compensation value DC is positive and this fact indicates that the current command value is also resist to the decreasing of steering angle direction.

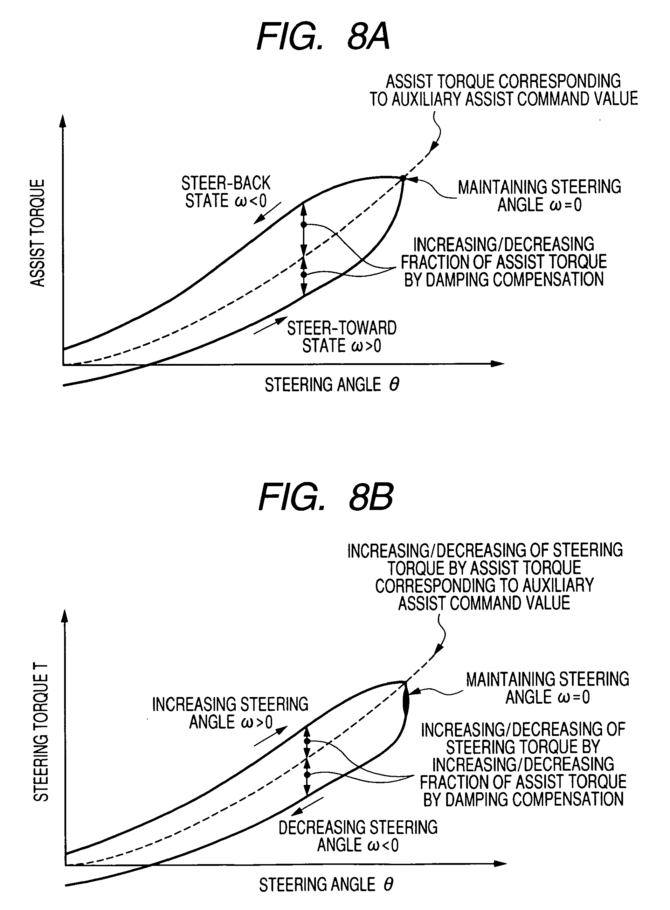

Fig. 8 shows a relationship between a steering angle θ and an assist torque by the motor, and the relationship between the steering angle θ and the steering torque T. As the steering angle θ increases, the SAT increases. The steering speed m is, when the steering wheel is turned toward the rack and, ω > 0, when the steering wheel is returned toward the neutral position, ω < 0, and when the steering wheel is held, ω = 0. The assist torque by the motor is shown in Fig. 8A, and the steering torque T is shown in Fig. 8B. Preferably, the absolute value of the damping compensation value becomes small so as not to impair the smooth feeling when the steering wheel is turned near the neutral position, and the absolute value of the damping compensation value becomes large so as to reduce the excessive return feeling when the steering wheel is returned toward the neutral position.

In Fig. 8B, the damping compensation value is negative during the steer-toward state, and the damping compensation value is positive during the steer-back state. As can be seen from this characteristic diagrams, when the steering angle θ is increased, the SAT increases. Therefore, the width (hysteresis) formed in accordance with the increase of the steering angle θ increases. Since the steering speed is reduced right before the steering wheel is held, the damping compensation value is small, and thus the hysteresis becomes small.

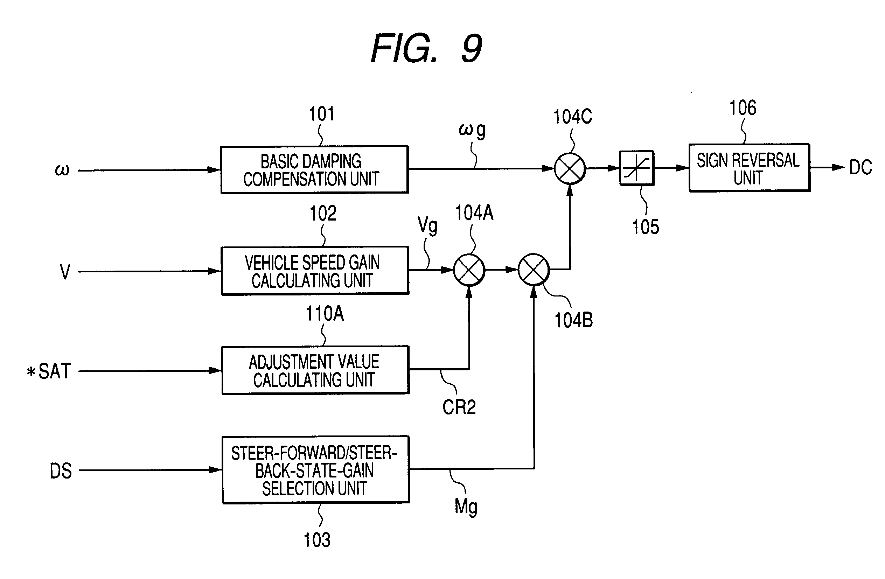

Fig. 9 shows a second embodiment of the damping compensation unit 100 by corresponding to Fig. 2. An adjustment value calculating unit 110A calculates an adjustment value CR2 according to only the SAT estimated value *SAT. It is preferable that the magnitude of the basic damping compensation value ωg and the adjustment value CR2 is determined according to not only the smooth feeling near the neutral position, the reaction feeling during the steer-toward state, the steering wheel returning speed, but also emergency escape performance. The reason is as follows. That is, when the damping is large, since the large steering torque T is required in the case of emergency, escape operation becomes difficult. Meanwhile, if the damping is very small, since the steering torque T is small, the steering wheel is excessively turned, and thus impairing the stability.

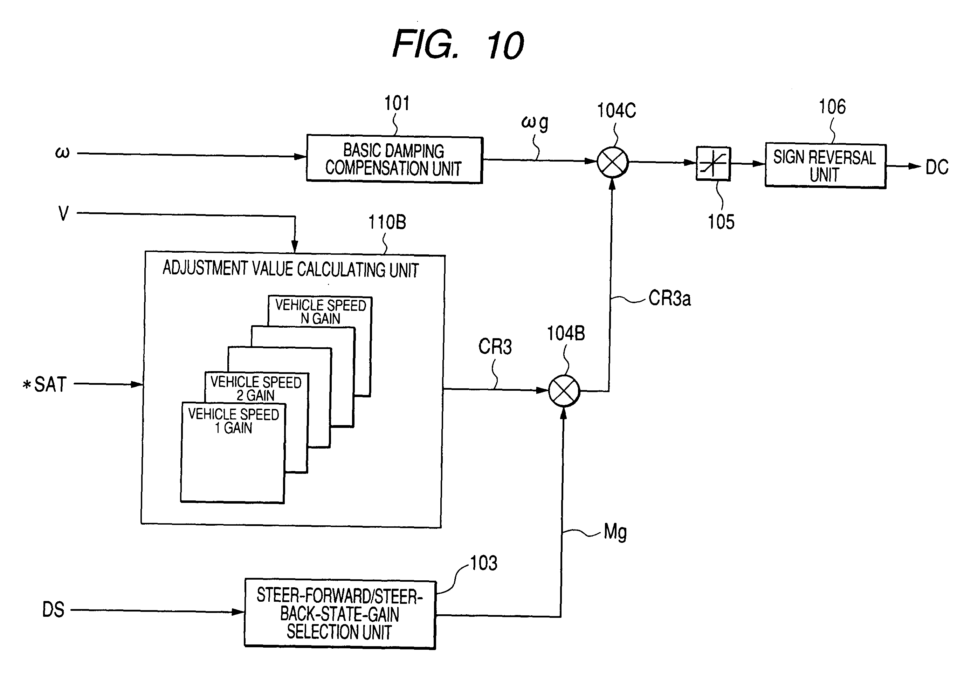

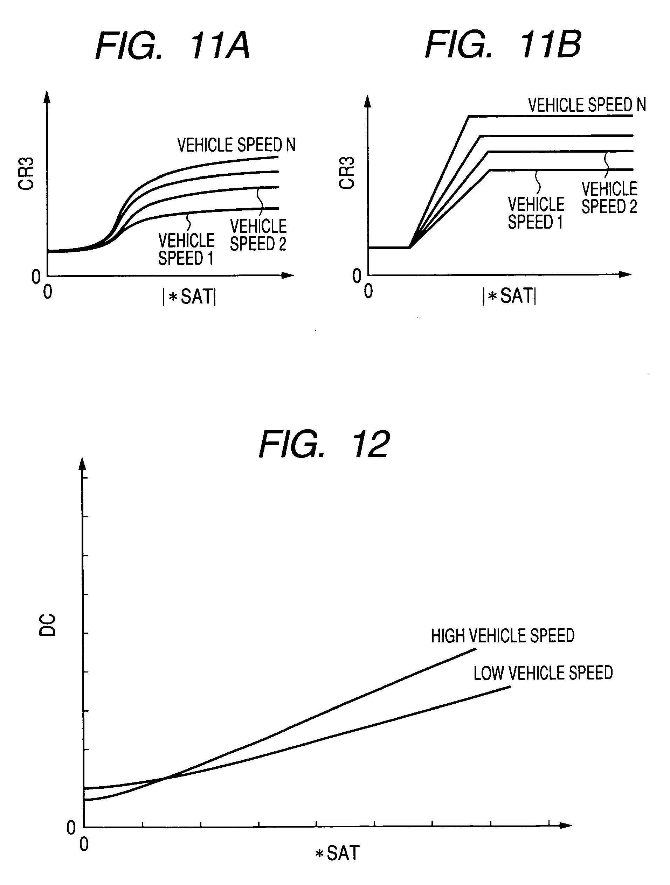

Fig. 10 shows a third embodiment of the damping compensation unit 100 by corresponding to Fig. 2. An adjustment value calculating unit 110B calculates an adjustment value CR3 according to the SAT estimated *SAT and the vehicle speed V, and does not have the vehicle speed gain unit calculating the vehicle speed gain Vg. The SAT adjustment value calculating unit in the adjustment value calculating unit 110B outputs a SAT adjustment value CR3 having the characteristics shown in Figs. 11A or 11B with respect to the absolute value |*SAT|. It is preferable that the magnitude of the basic damping compensation value ωg and the SAT adjustment value CR3 is determined according to not only the smooth feeling near the neutral position, the reaction feeling during the increasing of steering angle, the steering wheel returning speed, but also emergency escape performance.

Fig. 12 shows a characteristic example of the damping compensation value DC with respect to the high speed and low speed of the vehicle speed V. When the SAT estimated value *SAT is small, the damping compensation value DC of the high vehicle speed is smaller than that of the low vehicle speed. Since the low basic assist command value is set so as to provide the reaction feeling at the high vehicle speed, when the large damping compensation value DC is imparted, the smooth feeling is impaired. Since the restorative force at the high vehicle speed is large as compared to the restorative force at the low vehicle speed, when the steer-back state, the return feeling becomes stronger. In order to reduce this strong return feeling, when the SAT estimated *SAT is large, the damping compensation value at the high vehicle speed is larger than that at the low speed. As a result, as shown in Fig. 10, the SAT estimated value *SAT is inputted to an adjustment value calculating unit 110B that gain-converts on the basis of the vehicle speed V, the adjustment value CR3 obtained by the adjustment value calculating unit 110B is inputted to a multiplying unit 104B, the steer-forward/steer-back-state-gain Mg from the steer-forward/steer-back state selection unit 103 is multiplied by the multiplying unit 104B, and the multiplied result is inputted to the multiplying unit 104C as an adjustment value CR3a.

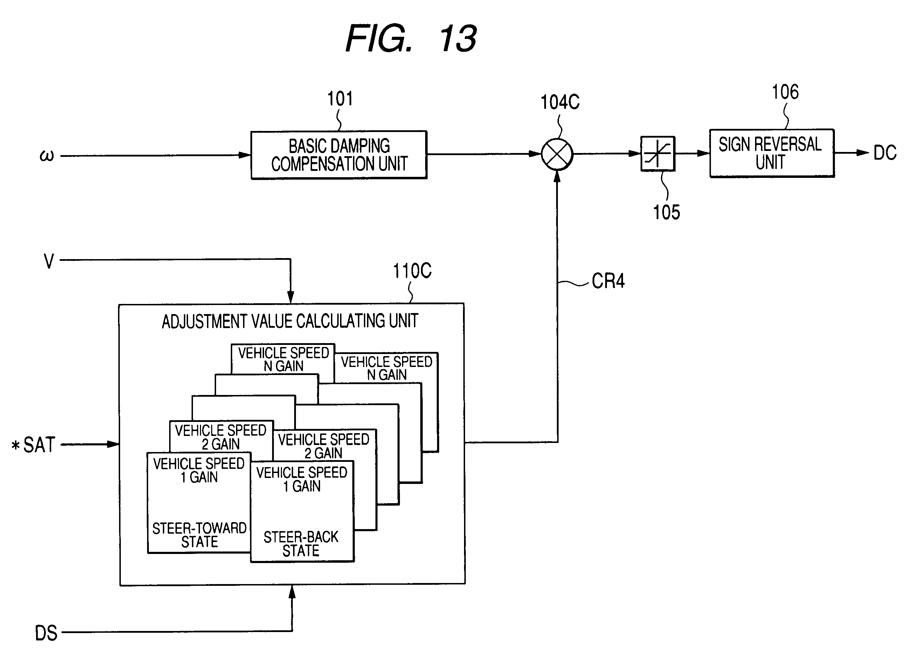

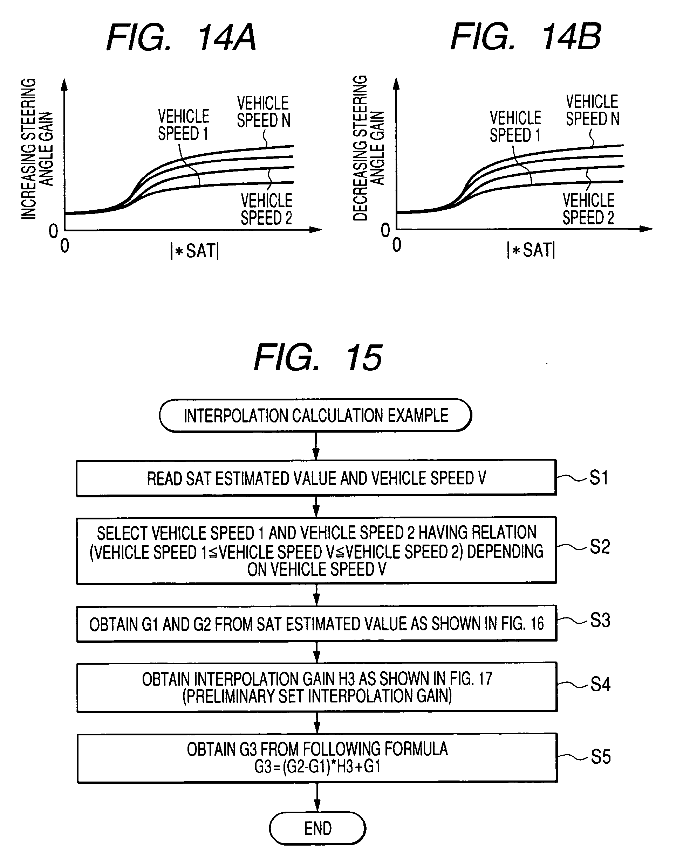

Fig. 13 shows a fourth embodiment of the damping compensation unit 100 by corresponding to Fig. 2. An adjustment value calculating unit 110C calculates an adjustment value CR4 according to the SAT estimated *SAT, the vehicle speed V, and the steer-forward/steer-back state determination signal DS. In addition, the adjustment value calculating unit 110C does not have the vehicle speed gain unit calculating the vehicle speed gain Vg and the steer-forward/steer-back state determination unit. The SAT adjustment value calculating unit in the adjustment value calculating unit 110C outputs a SAT adjustment value CR4 having the characteristics shown in Figs. 14A or 14B with respect to the absolute value |*SAT|. It is preferable that the magnitude of the basic damping compensation value ωg and the SAT adjustment value CR4 is determined according to not only the smooth feeling near the neutral position, the reaction feeling during the increasing of steering angle, the steering wheel returning speed, but also emergency escape performance.

A calculating sequence is as follows. the adjustment value calculating unit 110C determines to refer a calculating equation of the steer-toward state or a map (characteristic of Fig.14A), or to refer a calculating equation of the steer-back state or a map (characteristic of Fig. 14B), in accordance with the steer-forward/steer-back state determination signal DS. Then, the adjustment value calculating unit 110C calculates the adjustment value CR4 in accordance with the vehicle speed V and the SAT estimated value *SAT.

Next, a method of adjusting the damping compensation value by an interpolation will be described with reference to a flow chart of Fig. 15.

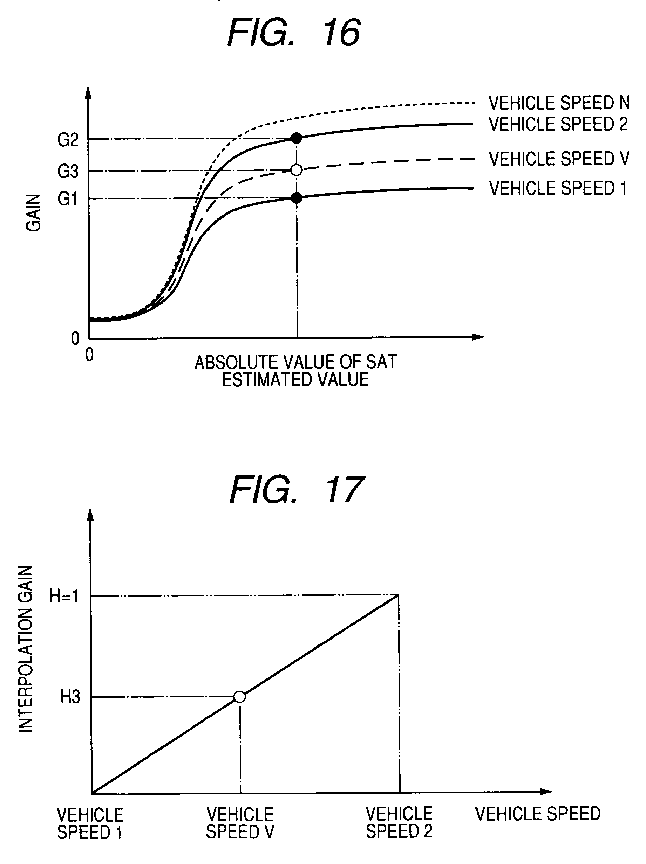

First, the SAT estimated value *SAT and the vehicle speed V is read (step S1), and as shown in Fig. 16, the characteristic of the vehicle speed 1 and the characteristic of the vehicle speed 2 satisfying the relationship of a following formula (3) are selected (step S2) by the vehicle speed V.

$$\text{Vehicle speed 1} \leq \text{Vehicle speed V} \leq \text{Vehicle speed 2}$$

$$\cdots (3)$$

Then, on the basis of the selected vehicle speed 1 and vehicle speed 2, gains G1 and G2 are obtained (step S3) from the absolute value of the SAT, estimated value *SAT shown in Fig. 16. Further, as shown in Fig. 17, a preliminarily determined interpolation gain H3 is obtained (step S4). Next, a gain G3 shown in Fig. 16 is calculated by a following formula (4).

$$G3 = (G2 - G1) \times H3 + G1 \qquad \cdots (4)$$

For the above described operation, the gain G3 at the vehicle speed V is obtained.

Note that, instead of the SAT estimated value, any one of a pinion torque, a rack axis force, a sum of the steering torque and a value obtained by converting the auxiliary steering command value into a pinion torque, a sum of the auxiliary steering command value and a value obtained by converting the steering torque into an auxiliary steering command value, a steering angle, and a rack displacement can be used. Furthermore, the steering speed can be obtained by an angle signal of the motor or a signal of a steering angle sensor.

In addition, an angular speed of the motor can be estimated from a current of the motor and a terminal voltage of the motor so as to be used as a steering speed.

While the invention has been described in connection with the exemplary embodiments, it will be obvious to tho se skilled in the art that various changes and modificatio n may be made therein without departing from the present i nvention, and it is aimed, therefore, to cover in the appe nded claim all such changes and modifications as fall with in the true spirit and scope of the present invention.

**Claims**

1. A control device for an electric power steering system which applies an auxiliary steering force to a steering mechanism by a motor, the control device comprising:

   a control unit that controls the motor in accordance with:

   an auxiliary steering command value calculated from a steering torque generated in a steering shaft and a vehicle speed; and
   a current detection value of the motor; and

   a damping compensation unit that calculates a basic damping compensation value in accordance with a steering speed, adjusts the basic damping compensation value based on a self aligning torque (SAT) estimated value and the steering speed, and outputs the adjusted damping compensation value,

   wherein the adjusted damping compensation value is added to the auxiliary steering command value so as to control the motor.

2. A control device for an electric power steering system which applies an auxiliary steering force to a steering mechanism by a motor, the control device comprising:

   a control unit that controls the motor in accordance with:

   an auxiliary steering command value calculated from a steering torque generated in a steering shaft and a vehicle speed; and
   a current detection value of the motor; and

   a damping compensation unit that calculates a basic damping compensation value in accordance with a steering speed, adjusts the basic damping compensation value based on a self aligning torque (SAT) estimated value, and outputs the adjusted damping compensation value,

   wherein the adjusted damping compensation value is added to the auxiliary steering command value so as to control the motor.

3. The control device for the electric power steering system according to claim 1 or 2, further comprising:

   a first adjusting unit that varies the damping compensation value with respect to the vehicle speed.

4. The control device for the electric power steering system according to claim 3,
   wherein the first adjusting unit calculates a vehicle speed gain with respect to the vehicle speed, and adjusts the damping compensation value based on the vehicle speed gain.

5. The control device for the electric power steering system according to claim 3,
   wherein the adjustment of damping compensation value is performed by an arithmetic expression in which one of a plurality of calculation parameters set in advance according to the vehicle speed is selected with respect to the vehicle speed, or by an interpolation calculation according to the vehicle speed.

6. The control device for the electric power steering system according to claim 3,
   wherein the adjustment of damping compensation value is performed by a map in which one of a plurality of maps defining relation between the SAT estimated value and an adjustment value set in advance according to the vehicle speed is selected with respect to the vehicle speed, or by an interpolation calculation according to the vehicle speed.

7. The control device for the electric power steering system according to claim 1 or 2, further comprising a determination unit that determines a steer-forward/steer-back state, and

   a second adjusting unit that varies the damping compensation value base on a determination of the determination unit.

**8.** The control device for the electric power steering system according to claim 7,
wherein the second adjusting unit calculates a steer-forward/steer-back-state-gain according to the determination result, and adjusts the damping compensation value on the basis of the steer-forward/steer-back-state-gain.

**9.** The control device for the electric power steering system according to claim 7,
wherein the adjustment of damping compensation value is performed by an arithmetic expression in which one of a plurality of calculation parameters set in advance according to the steer-forward/steer-back state is selected with respect to the determination result, or by an interpolation calculation according to the vehicle speed.

**10.** The control device for the electric power steering system according to claim 7,
wherein the adjustment of damping compensation value is performed by a map in which one of a plurality of SAT estimated value versus adjustment value maps set in advance according to the steer-forward/steer-back state is selected with respect to the determination result, or by an interpolation according to the vehicle speed.

**11.** The control device for the electric power steering system according to claim 1 or 2,
wherein instead of the SAT estimated value, any one of a torque of a pinion, a rack axial force, a sum of a value obtained by converting the auxiliary steering command value into the torque of a pinion and the steering torque, a sum of the auxiliary steering command value and a value obtained by converting the steering torque into an auxiliary steering command value, a steering angle, and a displacement of a rack is used.

**12.** The control device for the electric power steering system according to claim 1 or 2,
wherein the steering speed is obtained based on a motor angle signal.

**13.** The control device for the electric power steering system according to claim 1 or 2, wherein the steering speed is obtained based on a signal of a steering angle sensor.

**14.** The control device for the electric power steering system according to claim 1 or 2, wherein an rotation speed of the motor is estimated from a current of the motor and a terminal voltage of the motor, and

the estimated rotation speed of the motor is used as the steering speed.

FIG. 1

*FIG. 2*

ω → 101 BASIC DAMPING COMPENSATION UNIT → ωg → 104C ⊗ → 105 → 106 SIGN REVERSAL UNIT → DC

V → 102 VEHICLE SPEED GAIN CALCULATING UNIT → Vg → 104A ⊗ → 104B ⊗

*SAT → 110 ADJUSTMENT VALUE CALCULATING UNIT → CR1

DS → 103 STEER-FORWARD/STEER-BACK-STATE-GAIN SELECTION UNIT → Mg

# FIG. 3A

# FIG. 3B

# FIG. 4

## FIG. 5A

## FIG. 5B

## FIG. 6

SAT1 × ω WHEN SAT ESTIMATED VALUE > 0 AND ω < 0

STEER-TOWARD STATE CHARACTERISTIC A

SAT2

STEER-BACK STATE CHARACTERISTIC B

SAT1 × ω WHEN SAT ESTIMATED VALUE > 0 AND ω > 0

ENLARGING ADJUSTMENT WITH RESPECT TO SAT IN ORDER TO PROVIDE REACTION FEELING MATCHING WITH MOVEMENT OF VEHICLE

RISING SLOWLY IN ORDER TO PROVIDE SMOOTH FEELING AT BEGINNING OF STEERING

FIG. 7

STEER-BACK STATE

STEER-TOWARD STATE

MAINTAINING STEERING
ANGLE ω=0

DC

0

0

*SAT

CHARACTERISTIC AT |ω|=HIGH

CHARACTERISTIC AT |ω|=MEDIUM

CHARACTERISTIC AT |ω|=LOW

CHARACTERISTIC AT |ω|=LOW

CHARACTERISTIC AT |ω|=MEDIUM

CHARACTERISTIC AT |ω|=HIGH

STEER-BACK
STATE ω<0

ω=0

STEER-TOWARD
STATE ω>0

EP 1 780 096 A1

# FIG. 8A

ASSIST TORQUE CORRESPONDING
TO AUXILIARY ASSIST COMMAND VALUE

STEER-BACK
STATE $\omega<0$

MAINTAINING STEERING
ANGLE $\omega=0$

INCREASING/DECREASING
FRACTION OF ASSIST TORQUE
BY DAMPING COMPENSATION

STEER-TOWARD
STATE $\omega>0$

ASSIST TORQUE

STEERING ANGLE $\theta$

# FIG. 8B

INCREASING/DECREASING OF STEERING
TORQUE BY ASSIST TORQUE
CORRESPONDING TO AUXILIARY
ASSIST COMMAND VALUE

INCREASING STEERING
ANGLE $\omega>0$

MAINTAINING STEERING
ANGLE $\omega=0$

INCREASING/DECREASING OF
STEERING TORQUE BY
INCREASING/DECREASING
FRACTION OF ASSIST TORQUE
BY DAMPING COMPENSATION

DECREASING STEERING
ANGLE $\omega<0$

STEERING TORQUE T

STEERING ANGLE $\theta$

## FIG. 9

EP 1 780 096 A1

# FIG. 10

## FIG. 11A

## FIG. 11B

## FIG. 12

# FIG. 13

ω → **BASIC DAMPING COMPENSATION UNIT** (101) → ⊗ (104C) → [105] → **SIGN REVERSAL UNIT** (106) → DC

CR4

V → **ADJUSTMENT VALUE CALCULATING UNIT** (110C)

VEHICLE SPEED N GAIN
VEHICLE SPEED N GAIN

VEHICLE SPEED 2 GAIN
VEHICLE SPEED 2 GAIN

VEHICLE SPEED 1 GAIN

STEER-TOWARD STATE

VEHICLE SPEED 1 GAIN

STEER-BACK STATE

*SAT →

DS →

EP 1 780 096 A1

## FIG. 14A

## FIG. 14B

## FIG. 15

```
┌─────────────────────────────────────────┐
│      INTERPOLATION CALCULATION EXAMPLE    │
└─────────────────────────────────────────┘
```

READ SAT ESTIMATED VALUE AND VEHICLE SPEED V  — S1

SELECT VEHICLE SPEED 1 AND VEHICLE SPEED 2 HAVING RELATION (VEHICLE SPEED 1≦VEHICLE SPEED V≦VEHICLE SPEED 2) DEPENDING ON VEHICLE SPEED V  — S2

OBTAIN G1 AND G2 FROM SAT ESTIMATED VALUE AS SHOWN IN FIG. 16  — S3

OBTAIN INTERPOLATION GAIN H3 AS SHOWN IN FIG. 17 (PRELIMINARY SET INTERPOLATION GAIN)  — S4

OBTAIN G3 FROM FOLLOWING FORMULA
$G3 = (G2-G1)*H3+G1$  — S5

END

21

## FIG. 16

## FIG. 17

FIG. 18

EP 1 780 096 A1

FIG. 19

# FIG. 20

HIGH PRESSURE

MEDIUM PRESSURE

LOW PRESSURE

SLIDING RESISTANCE

MOVING SPEED

**European Patent Office**

**EUROPEAN SEARCH REPORT**

Application Number

EP 06 02 2703

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | DE 101 19 967 A1 (MITSUBISHI ELECTRIC CORP [JP]) 14 February 2002 (2002-02-14)<br>* figure 1 * | 2,3,7,<br>11,12,14<br>4-6,<br>8-10,13<br>1 | INV.<br>B62D5/04 |
| X<br>A | US 6 131 693 A (MUKAI YOSHINOBU [JP] ET AL) 17 October 2000 (2000-10-17)<br>* column 7, line 53 - column 9, line 5 *<br>* figure 2 * | 2,11,13<br>1 | |
| X<br>A | EP 1 127 775 A1 (MITSUBISHI ELECTRIC CORP [JP]) 29 August 2001 (2001-08-29)<br>* paragraph [0054] *<br>* figure 1 * | 2,3,12,<br>14<br>1 | |
| Y | EP 1 380 489 A (KOYO SEIKO CO [JP]) 14 January 2004 (2004-01-14)<br>* paragraphs [0003], [0004] *<br>* figure 3 * | 4-6,<br>8-10,13 | |
| | | | **TECHNICAL FIELDS SEARCHED (IPC)**<br><br>B62D |

The present search report has been drawn up for all claims

| Place of search | Date of completion of the search | Examiner |
|---|---|---|
| Munich | 5 February 2007 | Colonna, Massimo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 02 2703

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2007

| Patent document cited in search report | | | Publication date | Patent family member(s) | | | Publication date |
|---|---|---|---|---|---|---|---|
| DE 10119967 | A1 | | 14-02-2002 | JP | 3600510 | B2 | 15-12-2004 |
| | | | | JP | 2002029442 | A | 29-01-2002 |
| US 6131693 | A | | 17-10-2000 | JP | 3753511 | B2 | 08-03-2006 |
| | | | | JP | 11059468 | A | 02-03-1999 |
| EP 1127775 | A1 | | 29-08-2001 | DE | 60109840 | D1 | 12-05-2005 |
| | | | | DE | 60109840 | T2 | 19-01-2006 |
| | | | | JP | 2001233232 | A | 28-08-2001 |
| | | | | US | 2002019690 | A1 | 14-02-2002 |
| EP 1380489 | A | | 14-01-2004 | JP | 2004042691 | A | 12-02-2004 |
| | | | | US | 2004061465 | A1 | 01-04-2004 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2791299 B
- JP 2004276821 A
- JP 2004 A
- JP 276821 A
- JP 2002369565 A
- JP 3692660 B